Europäisches Patentamt

European Patent Office

Office européen des brevets

(19)

(11) Veröffentlichungsnummer: **0 065 622
B1**

## EUROPÄISCHE PATENTSCHRIFT

(45) Veröffentlichungstag der Patentschrift:
02.01.85

(51) Int. Cl.³: **D 06 N 7/00, B 32 B 5/12**

(21) Anmeldenummer: **82101314.1**

(22) Anmeldetag: **20.02.82**

(54) Matte, insbesondere als Unterbauschicht für einen künstlichen Rasen.

(30) Priorität: **23.04.81 DE 8112126 U**

(43) Veröffentlichungstag der Anmeldung:
**01.12.82 Patentblatt 82/48**

(45) Bekanntmachung des Hinweises auf die Patenterteilung:
**02.01.85 Patentblatt 85/1**

(84) Benannte Vertragsstaaten:
**AT BE CH DE FR GB IT LI LU NL SE**

(56) Entgegenhaltungen:
**DE - A - 1 635 488
FR - A - 1 096 121
GB - A - 1 046 192
US - A - 1 722 764
US - A - 2 720 476**

(73) Patentinhaber: **J.F. Adolff AG,
Eugen-Adolff-Strasse 102 Postfach 1109,
D-7150 Backnang (DE)**

(72) Erfinder: **Der Erfinder hat auf seine Nennung verzichtet**

(74) Vertreter: **Hoeger, Stellrecht & Partner,
Uhlandstrasse 14c, D-7000 Stuttgart 1 (DE)**

**Beschreibung**

Die Neuerung betrifft eine Matte aus schlingenförmig angeordneten, mehrschichtig überlagerten und an den Berührungspunkten miteinander verschweißten Kunststoffdrähten und mit körnigem Füllmaterial in den durch die Kunststoffdrähte definierten Hohlräumen der Matte zur Verwendung als Unterbauschicht für einen Bodenbelag, insbesondere einen künstlichen Rasen.

Derartige Matten zur Verwendung als Unterbauschichten für die Bodenbeläge von Freiflächen, insbesondere von Spiel- und Sportanlagen, sind bekannt und weisen eine in ein Füllmaterial eingebettete Matte der genannten Art auf, über der ein wasserdurchlässiger, künstlicher Rasen angeordnet werden kann, wobei zwischen dem Rasen und der Matte aus Kunststoffdrähten gegebenenfalls eine wasserdurchlässige Filtermatte angeordnet ist.

Bei den bekannten Bodenbelägen dient die aus Kunststoffdrähten gebildete Matte der Fixierung des Untergrundes für den künstlichen Rasen, wobei die aus den Drähten hergestellte Matte entweder in den aufgelockerten Untergrund eingewalzt oder auf diesen aufgelegt und anschließend mit Kies gefüllt wird.

Bei den bekannten Bodenbelägen ergeben sich insofern gewisse Schwierigkeiten, als die Unterbauschicht beim Einwalzen in einen aufgelockerten Untergrund aufgrund einer zu großen Belastung zerstört werden kann. Wenn zunächst die Unterbauschicht verlegt und dann mit einem Füllmaterial gefüllt wird, dann ergibt sich dagegen das Problem, daß die aus den Kunststoffdrähten bestehende Matte während der weiteren Bauarbeiten auf keinen Fall mehr angehoben werden darf, da sonst das Füllmaterial aus der Matte herausfällt und diese nicht mehr in die ursprüngliche Lage zurückgedrückt werden kann. Andererseits läßt sich ein solches unerwünschtes Hochziehen der Matte in der Praxis kaum vermeiden, da ständig die Gefahr besteht, daß die bereits verlegte und mit dem Füllmaterial gefüllte Matte beim Verlegen des künstlichen Rasens bzw. der weiteren Oberflächenschichten von einem Werkzeug, einer Baumaschine oder dergleichen erfaßt und an irgendeiner Stelle hochgezogen wird.

Da das Füllmaterial in der Matte außerdem relativ grobkörnig sein soll, um einen guten Wasserablauf zu gewährleisten — als Füllmaterial wird häufig Kies mit relativ kleiner Körnung verwendet —, und da andererseits derartiges Material nicht überall, beispielsweise in Wüstengebieten, ohne weiteres zur Verfügung steht, können die bekannten Bodenbeläge auch in dieser Hinsicht nicht voll befriedigen.

Ausgehend vom Stand der Technik und der vorstehend aufgezeigten Problematik liegt der Neuerung somit die Aufgabe zugrunde, eine verbesserte Matte für eine Unterbauschicht anzugeben, die auf einem vorbereiteten Untergrund schnell und bequem verlegt werden kann, ohne daß sich Probleme mit dem Füllmaterial ergeben, und die weiterhin auch nach der Verlegung unempfindlich gegen ein erneutes Anheben ist.

Diese Aufgabe wird bei einer Matte der eingangs beschriebenen Art gemäß der Neuerung dadurch gelöst, daß das Füllmaterial dauerhaft in den Hohlräumen der Matte festgelegt ist.

Der entscheidende Vorteil der Matte gemäß der Neuerung besteht darin, daß diese aufgrund der dauerhaften Verbindung zwischen Füllmaterial und Mattenmaterial aufgerollt transportiert und dann einfach auf dem vorbereiteten Untergrund ausgelegt werden kann, woraufhin dann sofort weitere Schichten des Bodenbelages auf die von Anfang an mit körnigem Füllmaterial gefüllte Matte aufgelegt werden können. Dabei bereitet es auch keine Schwierigkeiten, wenn die verlegte Matte versehentlich an irgendeiner Stelle noch einmal angehoben wird, da das Füllmaterial ja auch in diesem Fall in den Hohlräumen der Matte verbleibt, so daß diese einfach wieder zurückgelegt und geradegerichtet werden kann. Gegebenenfalls besteht dabei sogar die Möglichkeit, die mattenförmige Unterbauschicht einer bereits längere Zeit benutzten Anlage später noch einmal aufzurollen, um gegebenenfalls Wartungs- und/oder Reparaturarbeiten am Untergrund auszuführen.

Aufgrund des beschriebenen Aufbaus der Matte entfallen ferner alle Probleme, die bisher bei der Beschaffung und gleichmäßigen Verteilung des Füllmaterials auftreten.

Als vorteilhaft hat es sich erwiesen, wenn die Partikel des Füllmaterials durch ein Klebmittel miteinander und mit den Kunststoffdrähten der Matte verbunden sind, wobei es besonders günstig ist, wenn das Klebmittel bei der Fabrikation der Unterbauschicht aufgesprüht wird und dann die Oberflächen der Partikel des Füllmaterials und der Mattendrähte in Form einer dünnen Schicht umgibt.

Zusätzlich oder statt dessen besteht gemäß der Neuerung die Möglichkeit, dasFüllmaterial durch beidseitig dauerhaft auf die Hauptflächen der Matte aufkaschierte Materialschichten, insbesondere Filterschichten, festzulegen. In diesem Fall erhält man eine Baumatte, in der die Partikel des Füllmaterials zwischen den aufkaschierten Schichten frei beweglich oder ebenfalls miteinander verklebt sein können.

Weiterhin hat es sich in Ausgestaltung der Neuerung als vorteilhaft erwiesen, wenn als körniges Füllmaterial ein Kunststoffgranulat verwendet wird, da ein solches Material entsprechend den jeweiligen Erfordernissen in zahlreichen Formen und aus zahlreichen Materialien hergestellt werden kann und beispielsweise im Vergleich zu Kies relativ leicht ist, wodurch der Transport der gefüllten Matten vom Herstellerwerk zur Baustelle vereinfacht und erleichtert wird.

Weitere Einzelheiten und Vorteile der Neuerung werden nachstehend anhand von Zeichnungen noch näher erläutert. Es zeigt

Fig. 1 eine perspektivische schematische Ansicht eines Teilstücks einer bevorzugten Ausführungsform einer Matte gemäß der Neuerung und

Fig. 2 einen vergrößerten Querschnitt durch einen Kunststoffdraht der Matte gemäß Fig. 1 sowie durch einige miteinander und mit dem Kunststoffdraht verbundene Füllmaterialpartikel.

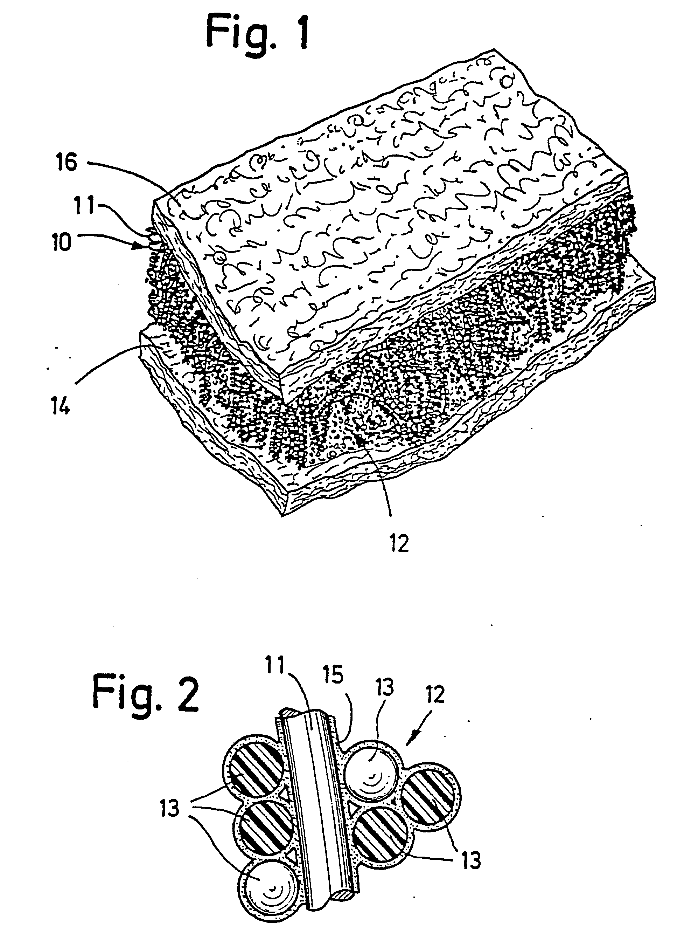

Im einzelnen zeigt Fig. 1 eine Matte 10 aus schlingenförmig angeordneten, mehrschichtig überlagerten und an den Berührungspunkten miteinander verschweißten Kunststoffdrähten 11. Derartige Matten sind im Handel beispielsweise unter dem Warenzeichen ENKAMAT-Matte erhältlich.

Weiterhin zeigt Fig. 1, daß die durch die Kunststoffdrähte 11 definierten Hohlräume der Matte 10 mit einem Füllmaterial, beispielsweise mit granuliertem Kunststoff, gegebenenfalls aber auch mit Kies oder mit Tonpartikeln gefüllt sind.

Das Füllmaterial 12 ist bezüglich der Matte 10 durch beidseitig dauerhaft auf die Hauptflächen der Matte 10 aufkaschierte Materialschichten (Vliese) 10, 14, die als Filterschichten ausgebildet sein können, festgelegt.

Zusätzlich oder statt dessen können die einzelnen Partikeln 13 des Füllmaterials 12 miteinander und mit den Drähten 11 der Matte gemäß Fig. 2 über dünne Klebmittelschichten 15 an ihrer Oberfläche verbunden sein, wobei der flüssige Klebstoff zur Herstellung dieser Klebmittelschichten vorzugsweise auf die gefüllte Matte bzw. beim Füllen der Matte auf diese und die Partikel 13 des Füllmaterials 12 aufgesprüht wird. Wenn dabei als Füllmaterial ein Kunststoffgranulat geeigneter Körnung verwendet wird, ist es besonders vorteilhaft, wenn als Klebmittel ebenfalls ein Kunststoff verwendet wird, der in einem geeigneten, flüchtigen Lösungsmittel gelöst ist.

### Patentansprüche

1. Matte aus schlingenförmig angeordneten, mehrschichtig überlagerten und an den Berührungspunkten miteinander verschweißten Kunststoffdrähten und mit körnigem Füllmaterial in den durch die Kunststoffdrähte definierten Hohlräumen der Matte zur Verwendung als Unterbauschicht für einen Bodenbelag, insbesondere einen künstlichen Rasen, dadurch gekennzeichnet, daß das Füllmaterial (12) dauerhaft in den Hohlräumen der Matte festgelegt ist.

2. Matte nach Anspruch 1, dadurch gekennzeichnet, daß die Partikel (13) des Füllmaterials (12) durch ein Klebmittel miteinander und mit den Kunststoffdrähten (11) der Matte (10) verbunden sind.

3. Matte nach Anspruch 2, dadurch gekennzeichnet, daß das Klebmittel in Form einer dünnen Klebmittelschicht (15) auf den Oberflächen der Partikel (13) und der Kunststoffdrähte (11) vorgesehen ist.

4. Matte nach einem der Ansprüche 1 bis 3, dadurch gekennzeichnet, daß das Füllmaterial (12) durch beidseitig dauerhaft auf die Hauptflächen der Matte (10) aufkaschierte Materialschichten (14, 16) festgelegt ist.

5. Matte nach Anspruch 4, dadurch gekennzeichnet, daß die aufkaschierten Materialschichten (14, 16) als Filterschichten ausgebildet sind.

6. Matte nach einem der Ansprüche 1 bis 5, dadurch gekennzeichnet, daß als körniges Füllmaterial (12) ein granuliertes Kunststoffmaterial vorgesehen ist.

### Claims

1. A mat of plastics filaments, which are disposed in the manner of loops, are superposed in a plurality of layers and are welded to one another at the contact points, and with a granular filling material in the hollow spaces, of the mat, defined by the plastics filaments, to be used as a backing for a ground covering, in particular artificial grass, characterized in that the filling material (12) is permanently fixed in the hollow spaces of the mat.

2. A mat as claimed in claim 1, characterized in that the particles (13) of the filling material (12) are connected to one another and to the plastics filaments (11) of the mat (10) by an adhesive.

3. A mat as claimed in claim 2, characterized in that the adhesive is provided in the form of a thin adhesive layer (15) on the surfaces of the particles (13) and the plastics filaments (11).

4. A mat as claimed in one of claims 1 to 3, characterized in that the filling material (12) is fixed by layers of material (14, 16) which are permanently applied to the main surfaces of the mat (10) on both sides.

5. A mat as claimed in claim 4, characterized in that the applied layers of material (14, 16) are formed as filter layers.

6. A mat as claimed in one of claims 1 to 5, characterized in that a granulated plastics material is provided as the granular filling material (12).

### Revendications

1. Natte constituée de fils de substance synthétique agencés en boucles, superposés en plusieurs couches et soudés mutuellement aux points de contact et d'une matière de remplissage granuleuse dans les cavités de la natte, formées par les fils de substance synthétique, cette natte étant destinée à être utilisée comme souscouche pour un revêtement de sol, en particulier un gazon artificiel, caractérisée en ce que la matière de remplissage (12) est fixée de manière durable dans les cavités de la natte.

2. Natte suivant la revendication 1, caractérisée en ce que les particules (13) de la matière de remplissage (12) sont reliées par un agent adhésif l'une à l'autre et aux fils de substance synthétique (11) de la natte (10).

3. Natte suivant la revendication 2, caractérisée en ce que l'agent adhésif est prévu sous la forme d'une mince couche (15) sur les surfaces des particules (13) et des fils de substance synthétique (11).

4. Natte suivant l'une des revendications 1 à 3, caractérisée en ce que la matière de remplissage (12) est fixée par des couches de matière (14, 16) appliquèes sur les faces principales de la natte (10) en format des deux côtés un stratifié durable.

5. Natte suivant la revendication 4, caractérisée en ce que les couches de matière (14, 16) appliquées de façon à former un stratifié sont réalisées sous la forme de couches de filtrage.

6. Natte suivant l'une des revendications 1 à 5, caractérisée en ce que, comme matière de remplissage granuleuse (12), on prévoit une matière à base de substance synthétique granulée.

# Fig. 1

# Fig. 2